# EUROPEAN PATENT SPECIFICATION

(11) **EP 4 367 122 B1**
(45) Date of publication and mention of the grant of the patent: **17.06.2026**
(21) Application number: 22738433.6
(22) Date of filing: 27.06.2022
(51) Int. Cl.: C07F 9/30, C08K 5/5313, C09K 21/12

(54) **SUSTAINABLY PRODUCED DIALKYLPHOSPHINIC SALTS**
NACHHALTIG HERGESTELLTE DIALKYLPHOSPHINSÄURESALZE
SELS DIALKYLPHOSPHINIQUES PRODUITS DE MANIÈRE DURABLE

(30) Priority: 07.07.2021 EP 21184297
(43) Date of publication of application: 15.05.2024
(73) Proprietor: Clariant International Ltd, 4132 Muttenz (CH)
(72) Inventor: BAUER, Harald, 50170 Kerpen (DE); SICKEN, Martin, 51149 Köln (DE); SCHMITT, Elmar, 65597 Hünfelden (DE)
(74) Representative: Zusammenschluss Clariant
(86) International application number: PCT/EP2022/067572
(87) International publication number: WO 2023/280613

(56) References cited:
- WO-A1-2010/086507
- WO-A1-2011/050537
- CN-B- 103 172 666
- CN-B- 104 478 923
- US-B1- 6 329 544

## Description

The invention relates to a process for production of sustainably produced dialkylphosphinic salts from renewable raw materials.

In the context of the present invention, the term "sustainable" or "sustainably" is defined in relation to environmental goals exclusively, and refers to the ability to maintain or enhance resource productivity on a long-term basis.

CN 103172666 B discloses a preparation method of dialkyl phosphinate with high thermal stability. The preparation method comprises the steps of: (a), adding strong acid to dialkyl phosphinic acid and/or a dialkyl phosphinic acid alkali metal salt aqueous solution to obtain dialkyl phosphinic acid and/or the dialkyl phosphinic acid alkali metal salt aqueous solution with pH lower than 1; (b), reacting a mixture of a metal compound and water with the dialkyl phosphinic acid and/or the dialkyl phosphinic acid alkali metal salt aqueous solution with the pH lower than 1 to generate dialkyl phosphinic acid metal salt, wherein the pH of the solution after the reaction is lower than 1 ; and (c), filtering, recycling the filtrate, washing and drying the filter cake to obtain the corresponding dialkyl phosphinate.

CN 104478923 B discloses a diethyl phosphinic acid without single ethylphosphinic acid group and its preparation method, wherein the preparation method comprises the following steps: mixing sodium hypophosphite monohydrate, acetic anhydride and an organic solvent, adding an organic acid and then concentrated sulfuric acid or anhydrous sulfuric acid, allowing to cool and sit, filtering to recycle sodium sulfate to obtain anhydrous hypophosphorous acid solution; feeding ethylene and using titration of initiator to obtain the first mixture; and using distillation to recover the organic acid and organic solvent.

US 6329544 B1 relates to a process for preparing dialkylphosphinic acids and/or alkali metal salts thereof by reacting olefins with alkylphosphonous and/or hypophosphorous acid and/or alkali metal salts thereof, which comprises carrying out the reaction in the presence of an azo free-radical initiator. This US patent also relates to the use of the products prepared by the abovementioned process for preparing flame retardants.

WO 2011/050537 A1 relates to conjugated diene phosphinate compounds for making halogen free phosphinate-containing flame retardants, inimer and metal extractants, method for preparing said compounds from unsaturated ketones or aldehydes, and the use thereof.

WO 2010/086507 A1 relates to a method of producing olefinic monomers for the production of a polymer, and particularly relates to the production of tall oil-based biopolymers, such as polyolefins. In the stages of the production method, bio oil, with a content of over 50% of fatty acids of tall oil and no more than 25% of resin acids of tall oil, and hydrogen gas are fed into a catalyst bed; the oil is catalytically deoxygenated in the bed by hydrogen; the flow exiting the bed is cooled down and divided into a hydrocarbon-bearing liquid phase and a gas phase; and the hydrocarbon-bearing liquid is subjected to steam cracking to provide a product containing polymerizing olefins. The deoxygenation in the bed can be followed by a catalytic cracking or, with a suitable catalyst, the deoxygenation and cracking can be simultaneous. The separated hydrogen-bearing gas phase can be circulated in the process.

Many materials that serve for production of (semi)organic products are traditionally obtained from crude oil. Environmental, economic and sustainability concerns are restricting the use of products from this limited resource. For example, synthetic surfactants have been blamed for environmental incidents, especially with regard to water problems in rivers and seas. Similar or different problems can occur in the case of products made from crude oil; moreover, crude oil itself is a severe environmental pollutant because it is hazardous to water, as in the case of tanker accidents for instance.

There is therefore a desire for producing (semi)organic materials from more environmentally friendly and sustainable resources. Recent researches and industrial developments in chemical engineering have shown that conventional monomers such as ethylene, acrylic acid or methyl methacrylate could be produced entirely from renewable raw materials. As used herein, the term "renewable" refers to a material derived from natural processes such as agriculture or forestry that can be replenished or restored to remain available for future generations.

Such new processes can have the disadvantage that entirely different raw materials are needed for the chemical manufacturing purpose, which requires a complete remodelling of the original petroleum-based production processes and the associated facilities. The complete abandonment of the existing, well-functioning traditional factories itself is a huge waste and not environmentally friendly.

Moreover, it is frequently the case that processes based on conventional petroleum-based raw materials are energetically superior to other alternative processes from renewable raw materials. As used herein, what is meant by "energetically superior" is lower energy consumption to produce same amount of the end product. This energy consumption can be measured, for example, by means of the carbon footprint. This is accomplished, inter alia, in what is called the life-cycle analysis in the calculation of the release of carbon dioxide equivalents for the raw materials used and the production process employed.

Therefore, there has been a need to produce chemical materials with an increased sustainable content, namely from a process featuring improved sustainability from the traditional petroleum-based process while largely preserving the optimal energy efficiency. In the context of the present invention, such produced chemical materials are referred as "sustainably produced" chemical materials.

It is an object of the present invention to provide a process for sustainably produced dialkylphosphinic salts, with better sustainability than the traditional petroleum-based process.

The invention therefore provides sustainably produced dialkylphosphinic salts of the formula (I) 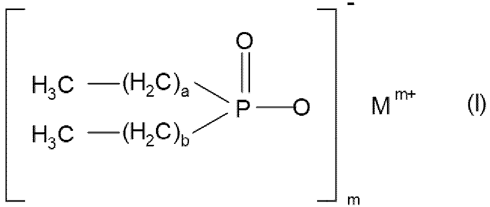 in which
- a and b: may be the same or different and are each independently 1 to 9, and where the carbon chains are linear and
- M: is Mg, Ca, Al, Sb, Sn, Ge, Ti, Fe, Zr, Zn, Ce, Bi, Sr, Mn, Li, Na, K and/or a protonated nitrogen base and
- m: is 1 to 4,
characterized in that the process comprises:
feeding a substream of renewable raw materials and/or recycled raw materials into a main stream of conventional raw materials originated from petroleum;
converting said renewable raw material and/or recycled raw materials to ethylene together with said conventional raw materials;
reacting the resultant ethylene stream with derivatives of hypophosphorous acid to give a derivative of the dialkylphosphinic acid; and
reacting said derivative of the dialkylphosphinic acid with a metal salt to give dialkylphosphinic salts of the formula (I),
wherein the renewable raw materials are tall oil, tung oil, wood tar, creosote, or vegetable oils such as palm oil, soya oil, rapeseed oil, sunflower oil, palm kernel oil, cottonseed oil, peanut oil, maize kernel oil, coconut oil, olive oil, sesame oil, linseed oil and/or safflower oil,
wherein said recycled raw materials are selected from food wastes, residues or wastes from food production, papermaking and pulp processing,
and the ratio of said mainstream of conventional raw material to said substream of renewable raw materials and/or recycled raw materials is 10⁹:1 to 1:10⁶.

Preferably, in formula (I), a and b are the same or different and are each independently 1 to 5, where the carbon chains may be linear, branched or cyclic and M is Al, Fe, TiO_{q} (with q = 0 to 1.9) or Zn.

More preferably, in formula (I), a and b are each 1 and M is Al.

In the context of the present invention, the sustainably produced carbon content of the dialkylphosphinic salts preferably comes from olefins produced from renewable or recycled raw materials.

Said renewable raw materials are preferably selected from tall oil, tung oil, wood tar, creosote, or vegetable oils such as palm oil, soya oil, rapeseed oil, sunflower oil, palm kernel oil, cottonseed oil, peanut oil, maize kernel oil, coconut oil, olive oil, sesame oil, linseed oil and/or safflower oil. One preferred category of such renewable raw material is tall oil.

Said recycled raw materials can be selected from food wastes, residues or wastes from food production, papermaking and pulp processing. One particularly preferred example of said recycled raw materials is pyrolysis oil from plastic wastes, for example from used tyres.

Preference is given to ensuring the classification of the olefin originating from renewable raw material in the total amount of the substream process by means of a certification method and a resultant certificate. A preferred certification scheme for an olefin originating from renewable raw material in Germany is the REDcert² scheme run by TÜV Nord Cert GmbH for the certification of sustainable material flow in the chemical industry.

Preference is also given to a process in which the derivatives of hypophosphorous acid have been produced in a substream process from recycled raw materials and conventional raw materials.

It is preferable in accordance with the invention that raw materials for derivatives of hypophosphorous acid (white phosphorus in particular) come from a mono-incineration process as described, for example, by EP2792949A1 or DE102016011287A1. According to the invention, a modified Wöhler process is applied to the sludge.

It is preferable in accordance with the invention that derivatives of hypophosphorous acid are produced from white phosphorus that comes from a thermochemical process which is operated entirely with recycled raw materials that are of recycled origin, or which is run by the substream method as mentioned above.

Recycled raw materials may preferably be sewage sludge from wastewater treatment plants, bonemeal etc.

Preference is likewise given to a process in which the aluminium salt has been produced in a substream process from recycled raw materials and conventional raw materials.

In the course of the substream process, in the production of aluminium sulfate, preference is given to using aluminium scrap, sewage sludge from wastewater treatment plants, and generally aluminium-containing chemical wastes.

The olefin used for producing the inventive dialkylphosphinic salts is preferably ethylene, and the aluminium salt used for producing the inventive dialkylphosphinic salts is preferably aluminium sulfate.

The process according to the invention for production of dialkylphosphinic salts according to the invention proceeds from an organic component, a phosphorus component and a metal component.

The process according to the invention for production of dialkylphosphinic salts according to the invention involves reacting an organic component with a phosphorus component and a metal component, wherein at least one of these reactants originate from a substream process according to the invention.

The raw materials according to the invention for the organic component according to the invention preferably come from sustainable production, the latter comprising renewable raw materials that have been produced on a CO₂-neutral basis, are not based on a petrochemical origin, are not based on crude oil, come from physical recycling and/or originate from the circular economy. According to the principles of the circular economy, the economy works with avoidance of wastes and environmental pollution.

In the process according to the invention for production of the dialkylphosphinic salts according to the invention, the organic component used is an olefin.

According to the invention, the raw material for the olefin in the aforementioned substream process of this kind is at least partially produced from a sustainable origin.

The raw material for the olefin may originate from tung oil, wood tar, creosote, vegetable oil (palm oil, soya oil, rapeseed oil, sunflower oil, palm kernel oil, cottonseed oil, peanut oil, maize kernel oil, coconut oil, olive oil, sesame oil, linseed oil and/or safflower oil), and also from fats and oils from food wastes or from residues and/or wastes from food production and processing.

The raw material for the olefin may also originate from plastics from recycled processes, such as from pyrolysis oils from plastic wastes.

Tall oil usable in accordance with the invention advantageously comes from the pulp process (Kraft process). The tall oil components here are subjected to alkaline hydrolysis and converted to the acids by acidification. Crude tall oil is obtained. This is refined into the resin acids and fatty acids by vacuum distillation. There is also tall oil pitch and low boilers.

Tall oil usable in accordance with the invention is composed of 40-45% by weight of fatty acids, 30-50% by weight of resin acids and 10-28% by weight of sterins.

For the possible use or utilization of the sustainable raw materials, it is important that they are as similar as possible in their physical properties to the conventional non-sustainable raw materials. For instance, for reasons of pumpability, viscosity (for example at 70°C) should have a value of 25-40 mm²/s, and the softening point should be between 0 and 100°C.

For reduction of the formation of coke encrustations for a utilization according to the invention, it is essential that the tall oil has a sulfur content of 0.003% to 3%.

To keep the corrosion of vessel walls low, according to the invention, the tall oil has an acid number of 145-180 mg KOH/g.

The resin acids are condensed tricyclic systems (resins, C₂₀H₃₀O₂).

The tall oil fatty acids according to the invention are C₁₈ fatty acids similar to soybean oil. Neutral components ("sterins", esters, sterols, hydrocarbons) are unwanted.

Fatty acids usable in accordance with the invention are palmitic acid, stearic acid, oleic acid, linoleic acid, pinolenic acid, arachidonic acid.

In the substream process for production of the organic component, the ratio of conventional raw material to sustainable raw material is preferably 10⁹:1 to 1:10⁶.

A substream process according to the invention for the production of the phosphorus component essentially proceeds from sewage sludge from communal or industrial sewage treatment plants. This contains calcium-, aluminium- and iron phosphate-containing precipitates, and organically bound phosphorus.

Iron phosphate-containing precipitates are less preferred here since they are converted to unwanted ferrophosphorus in the further process steps.

The aforementioned precipitates are preferably additionally added to the calcium phosphate ores in the conventional processes, for example thermoelectric processes, for production of yellow phosphorus.

The recycled sustainable phosphorus is preferably reacted with sodium hydroxide solution by boiling according to the prior art to give sodium hypophosphite.

The phosphorus that comes from a recovered sustainable (phosphorus) source, together with non-sustainable phosphorus, is preferably reacted with sodium hydroxide solution by boiling according to the prior art to give sodium hypophosphite. For the further production of the sustainably produced dialkylphosphinic salts according to the invention, the proportion (based on phosphorus) of hypophosphite used is only as high as that in which phosphorus from a recovered sustainable (phosphorus) source was originally used.

In the substream process for production of the phosphorus component, the ratio of conventional raw material to sustainable raw material is preferably 10⁹:1 to 1:10⁶.

Sustainable sources may also be recycling processes.

The substream process according to the invention for production of the metal component, for example for aluminium, is the feeding of recovered aluminium salts into what is called the Bayer process for production of aluminium hydroxide.

In the substream process for production of the metal component, the ratio of conventional raw material to sustainable raw material is preferably 10⁹:1 to 1:10⁶. Sustainable sources here may likewise be recycling processes.

### Example 1

640 g of tall oil is processed together with 10 387 kg of conventional naphtha in a steamcracker to give ethylene. The ratio of conventional raw material to sustainable raw material is 16 230:1. The amount of tall oil used corresponds to 168 g of sustainable ethylene. This sustainably produced ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 382 g of sustainably produced aluminium diethylphosphinate having a content of 100% by weight of sustainably produced carbon, based on the total mass of carbon, is obtained. The product has a residual moisture content of 0.2%, an average particle diameter of 28 µm, and a bulk density of 510 g/l (98% yield).

The aluminium diethylphosphinate thus obtained thus comes from a renewable origin to an extent of 43% (proportion of the ethylene from a renewable origin that has been converted to an extent of 100% in the aluminium diethylphosphinate).

### Example 2

640 g of tall oil is processed together with 10 387 kg of conventional naphtha in a steamcracker to give ethylene. The ratio of conventional raw material to sustainable raw material is 16 230:1. 168 g of this ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 382 g of partly sustainably produced aluminium diethylphosphinate having a content of 0.006% by weight of sustainably produced carbon, based on the total mass of carbon, is obtained. The product has a residual moisture content of 0.15%, an average particle diameter of 31 µm, and a bulk density of 530 g/l (98% yield).

### Example 3

640 g of tall oil is processed together with 624 454.994 kg of conventional naphtha in a steamcracker to give ethylene. The ratio of conventional raw material to sustainable raw material is 975 711:1. The amount of tall oil used corresponds to 168 g of sustainable ethylene. This sustainably produced ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 384 g of sustainably produced aluminium diethylphosphinate having a content of 100% by weight of sustainably produced carbon, based on the total mass of carbon, is obtained. The product has a residual moisture content of 0.2%, an average particle diameter of 28 µm, and a bulk density of 500 g/l (98.5% yield).

### Example 4

10.6 g of tall oil is processed together with 10 387.797 kg of conventional naphtha or gas oil in a steamcracker to give ethylene. The ratio of conventional raw material to sustainable raw material is 975 711:1. 168 g of this ethylene is fully reacted with 318 g of sodium hypophosphite monohydrate and 440 g of demineralized water at 120°C, 10 bar, with addition of sodium peroxodisulfate additive (processing aid). The product is additionally reacted with 1990 g of demineralized water and 628 g of aluminium sulfate solution (containing 4.3% Al). The pH is kept between 2 and 7 with pH modifiers, and the temperature between 25 and 100°C. The resultant solids are filtered off between 25 and 100°C, and washed with 39 to 7800 g of demineralized water between 25 and 100°C. After drying at 60 to 150°C and a pressure of 0.1 to 1 bar over the course of 0.1 to 10 h, 380 g of partly sustainably produced aluminium diethylphosphinate having a content of 0.0001% by weight of sustainably produced carbon, based on the total mass of carbon, is obtained. The product has a residual moisture content of 0.22%, an average particle diameter of 35 µm, and a bulk density of 535 g/l (97.5% yield).

### Example 5

Tall oil is converted to sustainable ethylene as a substream in a steamcracker. The ethylene obtained from the overall process which is attributable to the tall oil used in terms of mass balance is used for the subsequent synthesis.

Aluminium phosphate from sewage sludge is converted pro rata to yellow phosphorus in a thermoelectric process, and this is boiled with sodium hydroxide solution to give hypophosphite.

Ethylene is reacted with sodium hypophosphite in aqueous solution. This forms sodium diethylphosphinate. This is reacted - likewise in aqueous solution - with aluminium sulfate to give aluminium diethylphosphinate. The aluminium diethylphosphinate thus obtained thus comes from a renewable origin to an extent of 93% (proportion of the ethylene and hypophosphite from a renewable origin that has been converted to an extent of 100% in the aluminium diethylphosphinate).

### Example 6

Tall oil is converted to sustainable ethylene as a substream in a steamcracker. The ethylene obtained from the overall process which is attributable to the tall oil used in terms of mass balance is used for the subsequent synthesis.

Aluminium phosphate from sewage sludge is converted as a substream to yellow phosphorus in a thermoelectric process, and this is boiled with sodium hydroxide solution to give hypophosphite. The proportion of the sodium diethylphosphinate obtained in the overall process that is attributable via the phosphorus to the aluminium phosphate from sewage sludge is used for the subsequent synthesis. Aluminium sulfate is prepared from a recycled aluminium compound in a substream, and mainly from conventional aluminium hydroxide. The proportion of the aluminium sulfate obtained in the overall process which is attributable via the aluminium to recycled aluminium compound is used for the subsequent synthesis. Ethylene is reacted with sodium hypophosphite in aqueous solution. This forms sodium diethylphosphinate. This is reacted - likewise in aqueous solution - with aluminium sulfate to give aluminium diethylphosphinate. The aluminium diethylphosphinate thus obtained thus comes from a renewable origin to an extent of 100% (proportion of the ethylene, hypophosphite and aluminium from a renewable origin that has been converted to an extent of 100% in the aluminium diethylphosphinate).

### Example 7

880 g of pyrolysis oil from plastic recycling is processed together with 12 500 kg of conventional naphtha in a steamcracker to give ethylene. The ratio of conventional raw material to sustainable mineral material is 14 205:1. 168 g of this ethylene is reacted fully with 318 g of sodium hypophosphite monohydrate and 440 g of demineralized water at 120°C, 10 bar, with addition of sodium peroxodisulfate additive (processing auxiliary). The product is also reacted with 1990 g of demineralized water and 628 g of aluminium sulfate solution (containing 4.3% Al). The pH is kept between 2 und 7 with a pH modifier, and the temperature between 25 and 100°C. The solids formed are filtered off between 25 and 100°C and washed between 25 and 100°C with 39 to 7800 g of demineralized water. After drying at 60 to 150°C and a pressure of 0.1 to 1 bar for 0.1 to 10 h, 382 g of partly sustainably produced aluminium diethylphosphinate with a content of 0.007% by weight of sustainably produced carbon, based on the total mass of carbon, is obtained. The product has a residual moisture content of 0.2%, an average particle diameter of 30 µm and a bulk density of 530 g/l (98% yield).

### Example 8

880 g of pyrolysis oil from plastic recycling is processed together with 12 500 kg of conventional naphtha in a steamcracker to give ethylene. The ratio of conventional raw material to sustainable mineral material is 14 205:1. The amount of pyrolysis oil used corresponds to 202 g of sustainable ethylene. This is sustainably produced ethylene is reacted fully with 382 g of sodium hypophosphite monohydrate and 500 g of demineralized water at 120°C, 10 bar, with addition of sodium peroxodisulfate additive (processing auxiliary). The product is also reacted with 2200 g of demineralized water and 754 g of aluminium sulfate solution (containing 4.3% Al). The pH is kept between 2 and 7 with a pH modifier, and the temperature between 25 and 100°C. The solids formed are filtered off between 25 and 100°C and washed with 39 to 9000 g of demineralized water between 25 and 100°C. After drying at 60 to 150°C and a pressure of 0.1 to 1 bar for 0.1 to 10 h, 458 g of sustainably produced aluminium diethylphosphinate with 100% by weight of sustainably produced carbon, based on the total mass of the carbon, is obtained. The product has a residual moisture content of 0.1%, an average particle diameter of 28 µm and a bulk density of 510 g/l (98% yield). The aluminium diethylphosphinate thus obtained thus comes from a sustainable origin to an extent of 43% (proportion of the ethylene originating from a sustainable origin to an extent of 100% in the aluminium diethylphosphinate).

## Claims

1. Process for producing dialkylphosphinic salts of the formula (I), 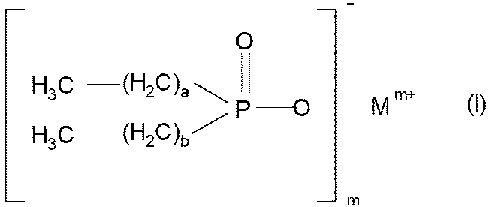 in which
a and b may be the same or different and are each independently 1 to 9, and where the carbon chains are linear, and
M is Mg, Ca, Al, Sb, Sn, Ge, Ti, Fe, Zr, Zn, Ce, Bi, Sr, Mn, Li, Na, K and/or a protonated nitrogen base and
m is 1 to 4,
**characterized in that** the process comprises:
feeding a substream of renewable raw materials and/or recycled raw materials into a main stream of conventional raw materials originated from petroleum;
converting said renewable raw material and/or recycled raw materials to ethylene together with said conventional raw materials;
reacting the resultant ethylene stream with derivatives of hypophosphorous acid to give a derivative of the dialkylphosphinic acid; and
reacting said derivative of the dialkylphosphinic acid with a metal salt to give dialkylphosphinic salts of the formula (I),
wherein the renewable raw materials are tall oil, tung oil, wood tar, creosote, or vegetable oils such as palm oil, soya oil, rapeseed oil, sunflower oil, palm kernel oil, cottonseed oil, peanut oil, maize kernel oil, coconut oil, olive oil, sesame oil, linseed oil and/or safflower oil,
wherein said recycled raw materials are selected from food wastes, residues or wastes from food production, and papermaking or pulp processing, and the ratio of said mainstream of conventional raw material to said substream of renewable raw materials and/or recycled raw materials is 10⁹:1 to 1:10⁶.

2. Process according to Claim 1, **characterized in that** the ratio of said mainstream of conventional raw material to said substream of renewable raw materials and/or recycled raw materials is 10⁹:1 to 1:10⁴.

3. Process according to Claim 1 or 2, **characterized in that** the ratio of said mainstream of conventional raw material to said substream of renewable raw materials and/or recycled raw materials is 10⁹:1 to 1:10³.

4. Process according to at least one of Claims 1 to 3, **characterized in that** a and b may be the same or different and are each independently 1 to 5, and where the carbon chains may be linear, branched or cyclic and M is Al, Fe, TiO_{q} with q = 0 to 1.9 or Zn.

5. Process according to at least one of Claims 1 to 4, **characterized in that** a and b are each 1 and M is Al.

6. Process according to at least one of Claims 1 to 5, **characterized in that** the renewable raw materials are tall oil.

7. Process according to at least one of Claims 1 to 5, wherein said recycled raw materials is pyrolysis oil from plastic wastes, for example from used tyres.

8. Process according to at least one of Claims 1 to 7, **characterized in that** the substream is made of renewable raw materials, said metal salt is an aluminium salt, and said dialkylphosphinic salt of the formula (I) is aluminium dialkylphosphinate.

9. Process according to Claim 8, **characterized in that** the derivatives of hypophosphorous acid have been produced in a substream process from recycled raw materials and conventional raw materials originated from petroleum.

10. Process according to Claim 8, **characterized in that** the aluminium salt has been produced in a substream process from recycled raw materials and conventional raw materials originated from petroleum.

11. Process according to at least one of Claims 8 to 10, **characterized in that** the aluminium salt is aluminium sulfate.

## Patentansprüche

1. Verfahren zur Herstellung von Dialkylphosphinsalzen der Formel (I), 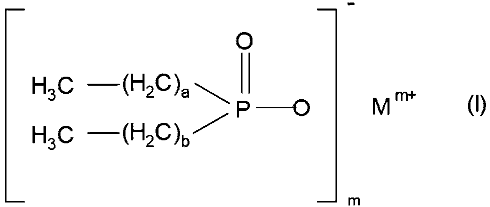 wobei
a und b gleich oder verschieden sein können und jeweils unabhängig voneinander 1 bis 9 betragen, und wobei die Kohlenstoffketten linear sind, und
M Mg, Ca, Al, Sb, Sn, Ge, Ti, Fe, Zr, Zn, Ce, Bi, Sr, Mn, Li, Na, K und/oder eine protonierte Stickstoffbase ist und
m 1 bis 4 ist,
**dadurch gekennzeichnet, dass** das Verfahren umfasst:
Zuführen eines Teilstroms aus nachwachsenden Rohstoffen und/oder recycelten Rohstoffen in einen Hauptstrom konventioneller Rohstoffe aus Erdöl;
Umwandeln der genannten erneuerbaren Rohstoffe und/oder recycelten Rohstoffe zusammen mit den genannten konventionellen Rohstoffen in Ethylen;
Umsetzen des resultierenden Ethylenstroms mit Derivaten von Hypophosphorsäure, um ein Derivat der Dialkylphosphinsäure zu erhalten; und
Umsetzen des Derivats der Dialkylphosphinsäure mit einem Metallsalz, um Dialkylphosphinsalze der Formel (I) zu erhalten,
wobei die erneuerbaren Rohstoffe Tallöl, Tungöl, Holzteer, Kreosot oder pflanzliche Öle wie Palmöl, Sojaöl, Rapsöl, Sonnenblumenöl, Palmkernöl, Baumwollsamenöl, Erdnussöl, Maiskernöl, Kokosnussöl, Olivenöl, Sesamöl, Leinöl und/oder Distelöl sind,
wobei die genannten recycelten Rohstoffe aus Lebensmittelabfällen, Rückständen oder Abfällen aus der Lebensmittelproduktion sowie der Papierherstellung oder Zellstoffverarbeitung ausgewählt werden,
und das Verhältnis des Hauptstroms aus konventionellen Rohstoffen zu dem Teilstrom aus erneuerbaren Rohstoffen und/oder recycelten Rohstoffen 10⁹: 1 bis 1:10⁶ beträgt.

2. Verfahren nach Anspruch 1, **dadurch gekennzeichnet, dass** das Verhältnis des Hauptstroms an konventionellen Rohstoffen zu dem Nebenstrom an nachwachsenden Rohstoffen und/oder recycelten Rohstoffen 10⁹:1 bis 1:10⁴ beträgt.

3. Verfahren nach Anspruch 1 oder 2, **dadurch gekennzeichnet, dass** das Verhältnis des Hauptstroms aus konventionellem Rohmaterial zu dem Teilstrom aus nachwachsenden Rohstoffen und/oder recycelten Rohstoffen 10⁹:1 bis 1:10³ beträgt.

4. Verfahren nach mindestens einem der Ansprüche 1 bis 3, **dadurch gekennzeichnet, dass** a und b gleich oder verschieden sein können und jeweils unabhängig voneinander 1 bis 5 betragen, wobei die Kohlenstoffketten linear, verzweigt oder cyclisch sein können und M Al, Fe, TiO_{q} mit q = 0 bis 1,9 oder Zn ist.

5. Verfahren nach mindestens einem der Ansprüche 1 bis 4, **dadurch gekennzeichnet, dass** a und b jeweils 1 sind und M Al ist.

6. Verfahren nach mindestens einem der Ansprüche 1 bis 5, **dadurch gekennzeichnet, dass** die nachwachsenden Rohstoffe Tallöl sind.

7. Verfahren nach mindestens einem der Ansprüche 1 bis 5, wobei der genannte recycelte Rohstoff Pyrolyseöl aus Kunststoffabfällen, beispielsweise aus Altreifen, ist.

8. Verfahren nach mindestens einem der Ansprüche 1 bis 7, **dadurch gekennzeichnet, dass** der Teilstrom aus nachwachsenden Rohstoffen besteht, das Metallsalz ein Aluminiumsalz ist, und das besagte Dialkylphosphinsalz der Formel (I) ein Aluminium Dialkylphosphinat ist.

9. Verfahren nach Anspruch 8, **dadurch gekennzeichnet, dass** die Hypophosphorsäurederivate in einem Nebenstromverfahren aus recycelten Rohstoffen und konventionellen Rohstoffen auf Erdölbasis hergestellt wurden.

10. Verfahren nach Anspruch 8, **dadurch gekennzeichnet, dass** das Aluminiumsalz in einem Teilstromverfahren aus recycelten Rohstoffen und konventionellen Rohstoffen auf Erdölbasis hergestellt wurde.

11. Verfahren nach mindestens einem der Ansprüche 8 bis 10, **dadurch gekennzeichnet, dass** das Aluminiumsalz Aluminiumsulfat ist.

## Revendications

1. Procédé de préparation de sels de dialkylphosphine de formule (I), 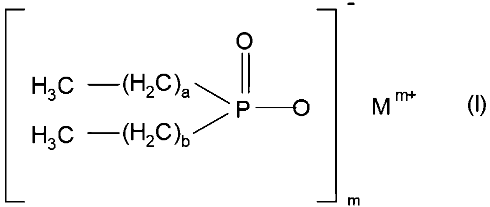 dans laquelle
a et b peuvent être identiques ou différents et valent chacun indépendamment de 1 à 9, et où les chaînes carbonées sont linéaires, et
M représente Mg, Ca, AI, Sb, Sn, Ge, Ti, Fe, Zr, Zn, Ce, Bi, Sr, Mn, Li, Na, K et/ou une base azotée protonée et
m vaut de 1 à 4,
**caractérisé en ce que** le procédé comprend:
l'introduction d'un sous-flux de matières premières renouvelables et/ou de matières premières recyclées dans un flux principal de matières premières conventionnelles issues du pétrole ;
la conversion desdites matières premières renouvelables et/ou recyclées en éthylène conjointement avec lesdites matières premières conventionnelles;
la mise en réaction du flux d'éthylène résultant avec des dérivés de l'acide hypophosphoreux pour donner un dérivé de l'acide dialkylphosphinique ; et
la réaction dudit dérivé de l'acide dialkylphosphinique avec un sel métallique pour donner des sels dialkylphosphiniques de formule (I),
dans laquelle les matières premières renouvelables sont l'huile de tall, l'huile de tung, le goudron de bois, la créosote ou des huiles végétales telles que l'huile de palme, l'huile de soja, l'huile de colza, l'huile de tournesol, l'huile de palmiste, d'huile de coton, d'huile d'arachide, d'huile de maïs, d'huile de coco, d'huile d'olive, d'huile de sésame, d'huile de lin et/ou d'huile de carthame,
dans laquelle lesdites matières premières recyclées sont choisies parmi les déchets alimentaires, les résidus ou les déchets issus de la production alimentaire, ainsi que de la fabrication du papier ou de la transformation de la pâte à papier, et le rapport entre ledit flux principal de matières premières conventionnelles et ledit flux secondaire de matières premières renouvelables et/ou de matières premières recyclées est 10⁹ :1 à 1:10⁶.

2. Procédé selon la revendication 1, **caractérisé en ce que** le rapport entre ledit flux principal de matière première conventionnelle et ledit sous-flux de matières premières renouvelables et/ou de matières premières recyclées est 10⁹ :1 à 1:10⁴.

3. Procédé selon la revendication 1 ou 2, **caractérisé en ce que** le rapport entre ledit flux principal de matière première conventionnelle et ledit sous-flux de matières premières renouvelables et/ou de matières premières recyclées est 10⁹:1 à 1:10³.

4. Procédé selon au moins l'une des revendications 1 à 3, **caractérisé en ce que** a et b peuvent être identiques ou différents et sont chacun indépendamment compris entre 1 et 5, et où les chaînes carbonées peuvent être linéaires, ramifiées ou cycliques et M est Al, Fe, TiO_{q} avec q = 0 à 1,9 ou Zn.

5. Procédé selon au moins l'une des revendications 1 à 4, **caractérisé en ce que** a et b sont chacun égal à 1 et M est Al.

6. Procédé selon au moins l'une des revendications 1 à 5, **caractérisé en ce que** les matières premières renouvelables sont de l'huile de tall.

7. Procédé selon au moins l'une des revendications 1 à 5, dans lequel lesdites matière première recyclée est une huile de pyrolyse issue de déchets plastiques, par exemple de pneus usagés.

8. Procédé selon au moins l'une des revendications 1 à 7, **caractérisé en ce que** le sous-flux est constitué de matières premières renouvelables, ledit sel métallique est un sel d'aluminium et ledit sel dialkylphosphinique de formule (I) est un dialkylphosphinate d'aluminium.

9. Procédé selon la revendication 8, **caractérisé en ce que** les dérivés de l'acide hypophosphoreux ont été produits dans un procédé de sous-flux à partir de matières premières recyclées et de matières premières conventionnelles issues du pétrole.

10. Procédé selon la revendication 8, **caractérisé en ce que** le sel d'aluminium a été produit dans un procédé de sous-flux à partir de matières premières recyclées et de matières premières conventionnelles issues du pétrole.

11. Procédé selon au moins l'une des revendications 8 à 10, **caractérisé en ce que** le sel d'aluminium est du sulfate d'aluminium.
